# EUROPÄISCHE PATENTSCHRIFT

(11) **EP 2 930 551 B1**
(45) Veröffentlichungstag und Bekanntmachung des Hinweises auf die Patenterteilung: **15.01.2020**
(21) Anmeldenummer: 14465502.4
(22) Anmeldetag: 09.04.2014
(51) Int. Cl.: G02B 27/01, B60K 35/00, G02B 7/182

(54) **Head-Up-Anzeige mit Positioniereinrichtung für eine um eine Schwenkachse schwenkbare Combinerscheibe**
Head-up display comprising positioning device for a combiner disc that can be pivoted around a pivot axis
Dispositif d'affichage à tête haute comprenant un dispositif de positionnement pour roue de combineur pivotant autour d'un axe de pivotement

(43) Veröffentlichungstag der Anmeldung: 14.10.2015
(73) Patentinhaber: Continental Automotive GmbH, 30165 Hannover (DE)
(72) Erfinder: Kissel, Robert Wolfgang, 63329 Egelsbach (DE); Zanzinger, Werner, 300408 Timisoara (RO); Lotz, Rüdiger, 64390 Erzhausen (DE)

(56) Entgegenhaltungen:
- EP-A2- 2 541 303
- US-A1- 2002 167 189
- US-A1- 2013 100 535

## Beschreibung

Die Erfindung bezieht sich auf eine Positioniereinrichtung für eine um eine Schwenkachse schwenkbare Combinerscheibe einer Head-Up-Anzeige, mit einem reversierbaren Drehantrieb, von dem ein Drehelement um eine Drehachse drehbar antreibbar ist, durch das die Combinerscheibe zwischen einer Ruheposition in einem Gehäuse in einer aus einer Öffnung des Gehäuses herausragenden Arbeitsposition bewegbar antreibbar ist.

Bei einer Head-Up-Anzeige mit einer derartigen Positioniereinrichtung für eine um eine Schwenkachse schwenkbare Combinerscheibe wird das virtuelle Bild mittels der optisch wirksamen Combinerscheibe erzeugt, die vorzugsweise vor dem Fahrer zwischen Windschutzscheibe und Armaturenbrett positioniert ist. Diese Combinerscheibe muss in die Ruheposition einfahrbar sein, um Beschädigungen vorzubeugen und um sie bei deaktivierter Head-Up-Anzeige aus dem Sichtbereich des Fahrers zu bewegen.

Aufgabe der Erfindung ist es daher, eine Positioniereinrichtung für eine um eine Schwenkachse schwenkbare Combinerscheibe der eingangs genannten Art zu schaffen, die bei einfachem und Bauraum sparendem Aufbau einen erhöhten Schutz der in Ruheposition befindlichen Combinerscheibe gegen Beschädigungen ermöglicht.

Die EP 2 541 303 A2 beschreibt eine Head-Up-Anzeige mit einer Positioniereinrichtung für ein um eine Schwenkachse schwenkbares Anzeigeelement mit einem reversierbaren Drehantrieb, von dem ein Drehelement um eine Drehachse drehbar antreibbar ist, durch das das Anzeigeelement zwischen einer Ruheposition in einem Gehäuse in einer aus einer Öffnung des Gehäuses herausragenden Arbeitsposition bewegbar antreibbar ist, wobei die Öffnung des Gehäuses von einer Abdeckung der Head-Up-Anzeige verschließbar ist. Hierbei werden ein Anzeigeelement und die Abdeckung gleichzeitig um eine gemeinsame Drehachse geschwenkt und gleichzeitig dazu auch die Abdeckung quer zur Oberfläche des Anzeigeelements verschoben, so dass die Abdeckung in der Ruheposition das Anzeigeelement bedeckt und in der Arbeitsposition das Anzeigeelement freigibt. Diese Ausgestaltung erfordert einen großen Bauraum.

Sie erfordert weiterhin einen Antriebsmotor, der stark genug ist, um sowohl das Anzeigeelement als auch die Abdeckung gleichzeitig zu schwenken und gleichzeitig die Abdeckung zu verschieben.

Die oben genannte Aufgabe wird durch die Merkmale des unabhängigen Anspruchs 1 gelöst. Bevorzugte Ausführungsbeispiele werden in den abhängigen Ansprüchen 2-15 definiert. Erfindungsgemäss ist die Öffnung des Gehäuses von einer Abdeckung verschließbar, die von dem Drehelement einer Bewegung der Combinerscheibe aus der Ruheposition in die Arbeitsposition voreilend aus einer die Öffnung verschließenden Verschlussposition in eine die Öffnung freigebende Offenposition sowie aus ihrer Offenposition einer Bewegung der Combinerscheibe aus der Arbeitsposition in die Ruheposition nacheilend in ihre Verschlussposition bewegbar antreibbar ist.

Durch die Abdeckung ist die Combinerscheibe in ihrer Ruheposition im Gehäuse gegen Beschädigungen geschützt. Da das Drehelement sowohl zum Antrieb der Combinerscheibe als auch zum Antrieb der Abdeckung dient ist nur ein einziger reversierbarer Drehantrieb für beide Funktionen erforderlich, wodurch nur ein geringer Bauraum benötigt wird und die Kosten für die Positioniereinrichtung niedrig gehalten werden können.

Zum Nacheinanderbetrieb der Bewegungen von Combinerscheibe und Abdeckung kann bei dem Ausfahrbetrieb der Combinerscheibe aus seiner Ruheposition in seine Arbeitsposition das Drehelement zunächst von einem die Combinerscheibe bewegbar antreibenden Antriebsmechanismus der Combinerscheibe entkoppelt und mit einem die Abdeckung bewegbar antreibenden Antriebsmechanismus der Abdeckung gekoppelt sein, der die Abdeckung aus ihrer Verschlussposition in ihre Offenposition bewegbar antreibt und dass nach Erreichen der Offenposition der Abdeckung der Antriebsmechanismus der Abdeckung von dem Drehelement entkoppelt ist und das Drehelement mit dem Antriebsmechanismus der Combinerscheibe gekoppelt und die Combinerscheibe aus seiner Ruheposition in seine Arbeitsposition bewegbar antreibbar ist, wobei bei einem Einfahrbetrieb der Combinerscheibe aus seiner Arbeitsposition in seine Ruheposition das Drehelement mit dem Antriebsmechanismus der Combinerscheibe gekoppelt sein kann und die Combinerscheibe aus seiner Arbeitsposition in seine Ruheposition bewegbar antreibbar ist und dass nach Erreichen der Ruheposition der Combinerscheibe der Antriebsmechanismus der Combinerscheibe von dem Drehelement entkoppelt und der Antriebsmechanismus der Abdeckung mit dem Drehelement gekoppelt ist und die Abdeckung aus ihrer Offenposition in ihre Verschlussposition bewegbar antreibbar ist.

Ist die Abdeckung in einer oder mehreren feststehenden Führungen zwischen ihrer Verschlussposition und ihrer Offenposition bewegbar geführt, so hat sie in jeder Position eine stabile Lage. Dazu kann die Abdeckung an ihren beiden in ihre Bewegungsrichtung gerichteten Seitenbereichen Führungselemente aufweisen, die in den Führungen bewegbar geführt sind, wobei eine besonders stabile Lage der Abdeckung erreicht wird, wenn ein erstes Führungselement an dem der in Arbeitsposition befindlichen Combinerscheibe näheren Frontendbereich der Abdeckung und ein zweites Führungselement an dem der in Arbeitsposition befindlichen Combinerscheibe entferten Rückendbereich der Abdeckung angeordnet ist.

Zur Optimierung der Bewegbarkeit der Abdeckung können die Führungen zwei annähernd hintereinander von einer Beobachterseite der in Arbeitsposition befindlichen Combinerscheibe weggerichtete Führungsbahnen sein, wobei das erste Führungselement in der der Combinerscheibe näheren ersten Führung und das zweite Führungselement in der der Combinerscheibe entfernteren zweiten Führung bewegbar geführt ist.

Erstreckt sich die erste Führungsbahn annähernd waagrecht und die zweite Führungsbahn ausgehend von dem Bereich des der Combinerscheibe entfernten Endes der ersten Führungsbahn in einem bogenartigen Verlauf zu ihrem annähernd senkrecht nach unten gerichteten Endbereich hin, so kann mit wenig Bauraumbedarf die Abdeckung aus einer annähernd waagrechten in eine annähernd senkrechte Lage bewegt werden.

Ist dabei der der Combinerscheibe nähere Anfangsbereich der zweiten Führungsbahn annähernd senkrecht nach oben gerichtet, so ist das rückseitige Ende der Abdeckung bei deren Ende der Schließbewegung auf kurzem Weg in eine annähernd waagrechte Lage bringbar.

Zum Bewegungsantrieb kann die Abdeckung ein oder mehrere Zahnstangen besitzen, die sich über die Länge der Abdeckung in Bewegungsrichtung der Abdeckung erstrecken und in die jeweils ein Zahnkranz des Drehelements oder ein von dem Drehelement drehbar antreibbares Zahnrad eingreifbar ist.

Das rückseitige Ende der Abdeckung ist bei dem Ende der Schließbewegung auf kurzem Weg in eine annähernd waagrechte Lage bringbar, wenn auch die Zahnstangen im Rückendbereich der Abdeckung einen zur Zahninnenseite nach innen gebogenen Verlauf aufweisen.

Um einen problemlosen Übergang nach Ende der Öffnungsbewegung der Abdeckung zur Ausfahrbewegung der Combinerscheibe zu erreichen, können die Zahnstangen bei Erreichen des Offenpositionsbereichs der Abdeckung aus der Verzahnung des Zahnkranzes des Drehelements oder der Verzahnung des Zahnrads aushebbar sein und bei Verlassen des Offenpositionsbereichs der Abdeckung in die Verzahnung des Zahnkranzes des Drehelements oder der Verzahnung des Zahnrads einsetzbar sein.

Sind dabei die Zahnstangen und/oder die Abdeckung in der Offenposition der Abdeckung von einem Federelement in Richtung zur Verschlussposition der Abdeckung kraftbeaufschlagt, so bewirkt zu Beginn einer Schließbewegung der Abdeckklappe das Federelement eine Bewegung der Abdeckklappe zum Wiedereingreifen der Zahnstangen in die Zahnräder.

Eine einfache Entkopplung des Antriebs der Combinerscheibe während des Antriebs der Abdeckung wird dadurch erreicht, dass an dem Drehelement ein konzentrischer Zahnsektor angeordnet ist, dessen Verzahnung während der Bewegung der Abdeckung aus der Verschlussposition in die Offenposition außer Eingriff von einem sektorförmigen Verzahnungselement ist und nach Erreichen der Offenposition der Abdeckung bei weiterer Drehung des Drehelements in gleiche Drehrichtung in Eingriff mit dem sektorförmigen Verzahnungselement gelangt und dieses um einen Stellhub drehbar antreibt, wobei sich das sektorförmige Verzahnungselement konzentrisch zur Schwenkachse der Combinerscheibe erstreckt und mit der Combinerscheibe verbunden ist.

Ist das Verzahnungselement über eine kraftschlüssige Kupplung mit der Combinerscheibe verbunden, so ist die Combinerscheibe gegen Beschädigungen durch eine unbeabsichtigte Kraftbeaufschlagung geschützt.

Der konzentrische Zahnsektor des Drehelements kann nach Antrieb um den Stellhub außer Eingriff von dem sektorförmigen Verzahnungselement gelangen und das sektorförmige Verzahnungselement von einer Feinstelleinrichtung über den Stellhub hinaus schwenkbar antreibbar sein. Dies ermöglicht es, die Combinerscheibe auf die für den jeweiligen Fahrer optimale Arbeitsposition einzustellen.

Dazu kann die Feineinstelleinrichtung eine Führungskurve an dem Drehelement aufweisen, in die am Ende des Stellhubs ein zur Schwenkachse der Combinerscheibe paralleler Zapfen einläuft und geführt ist, wobei die Führungskurve um die Drehachse des Drehelements spiralartig ansteigend ausgebildet ist. Die spiralartige Steigung bedeutet eine deutlich größere Übersetzung des Verstellantriebs, was die Feineinstellung auf einfache Weise ermöglicht.

Ein Ausführungsbeispiel der Erfindung ist in der Zeichnung dargestellt und wird im Folgenden näher beschrieben. Es zeigen:

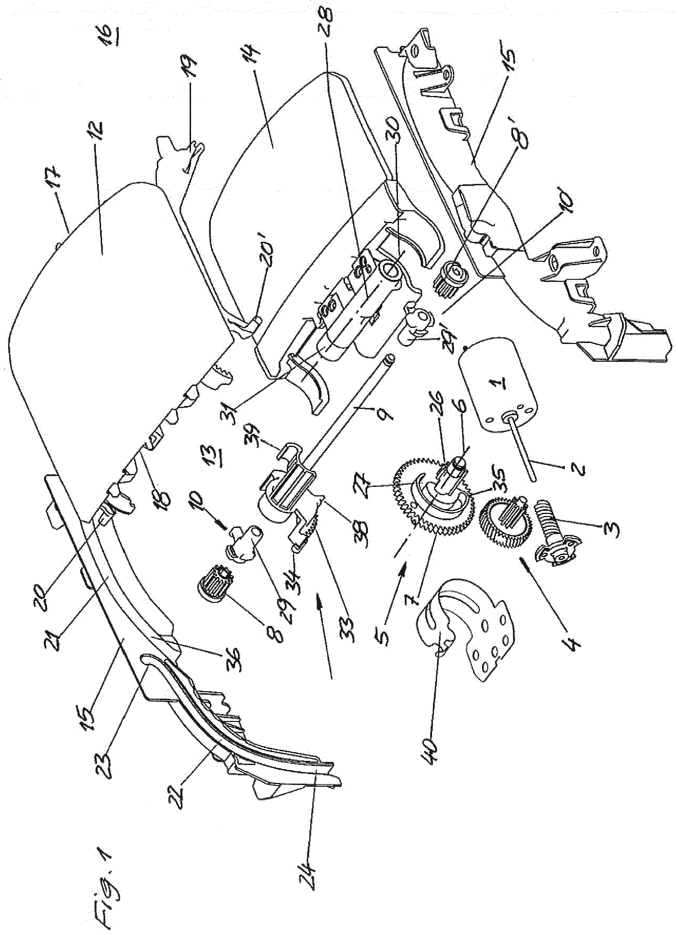

- Figur 1: eine perspektivische Explosionsdarstellung einer Positioniereinrichtung,
- Figur 2: einen Querschnitt der Positioniereinrichtung nach Figur 1 mit einer Abdeckung in Verschlussposition und einer Combinerscheibe in Ruheposition,
- Figur 3: einen Querschnitt der Positioniereinrichtung nach Figur 1 mit der Abdeckung nahe der Offenposition und der Combinerscheibe in Ruheposition,
- Figur 4: einen Querschnitt der Positioniereinrichtung nach Figur 1 mit der Abdeckung in der Offenposition und der Combinerscheibe nahe der Arbeitsposition,

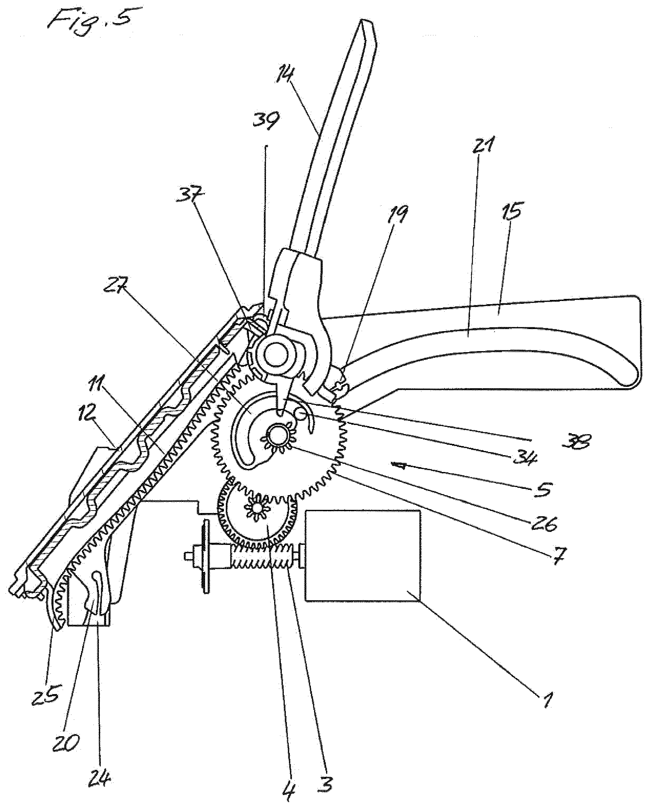

- Figur 5: einen Querschnitt der Positioniereinrichtung nach Figur 1 mit der Abdeckung in der Offenposition und der Combinerscheibe nahe der Arbeitsposition,
- Figur 6: einen Querschnitt der Positioniereinrichtung nach Figur 1 mit der Abdeckung in der Offenposition und der Combinerscheibe in der Arbeitsposition,
- Figur 7: einen Querschnitt der Positioniereinrichtung nach Figur 1 mit der Abdeckung in der Offenposition und der Combinerscheibe in der Arbeitsposition.

Die in den Figuren dargestellte Positioniereinrichtung für eine Combinerscheibe 14 einer Head-Up-Anzeige in einem Fahrzeug weist einen reversierbaren Schrittmotor 1 auf, von dessen Antriebswelle 2 eine Schnecke 3 drehbar antreibbar ist. Die Schnecke 3 treibt über ein Zwischenrad 4 ein Drehelement 5 um eine Drehachse 6 drehbar an.

Das Drehelement weist eine radial umlaufende Verzahnung 7 auf, die in ein Zahnrad 8 eingreift. Das Zahnrad 8 ist an dem einen Ende einer zur Antriebswelle parallelen Welle 9 fest angeordnet, wobei die Welle 9 an ihrem anderen Ende ein dem Zahnrad 8 entsprechendes zweites Zahnrad 8' trägt.

Die Welle 9 ist in zwei fest angeordneten Lagern 10, 10' drehbar gelagert.

Die Zahnräder 8, 8' sind jeweils in eine Zahnstange 11 eingreifbar, wobei die Zahnstangen 11 an den Unterseiten der Seitenbereiche einer Abdeckung 12, sich annähernd parallel zur Ebene der Abdeckung 12 erstreckend angeordnet sind, durch die eine Öffnung 13 eines eine Combinerscheibe 14 aufnehmenden Gehäuses im Sichtbereich des Fahrers des Fahrzeugs verschließbar ist, dessen Seitenwände 15, 15' dargestellt sind. Die der Beobachterseite entgegengesetzten Enden 25 der Zahnstangen 11 laufen nach unten gebogen aus.

Die Abdeckung 12 weist einen zu einer Beobachterseite 16 gerichtetes Frontend 17 und gegenüberliegend ein Rückend 18 auf.

Jeweils seitlich zu den Seitenwänden 15, 15' gerichtet besitzt die Abdeckung an ihrem Frontend 17 erste Führungselemente 19 und an ihrem Rückend 18 zweite Führungselemente 20, 20'.

Die ersten Führungselemente 19 ragen in erste Führungsbahnen 21, die ausgehend von der Beobachterseite 16 sich von dieser nach hinten entfernend annähernd waagrecht sich erstreckend in den Seitenwänden 15, 15' ausgebildet sind. Die der Beobachterseite 16 entfernten Enden 36 der ersten Führungsbahnen 21 laufen in einem leichten Bogen aus.

Die zweiten Führungselemente 20, 20' ragen in zweite Führungsbahnen 22, die sich von ihrem Anfangsbereich 23 annähernd von dem der Beobachterseite 16 entfernten Enden der ersten Führungsbahnen 21 aus in einem bogenartigen Verlauf zu ihrem annähernd senkrecht nach unten gerichteten Endbereich 24 hin erstrecken.

Die Anfangsbereiche 23 der zweiten Führungsbahnen 22 sind annähernd senkrecht nach oben gerichtet.

Konzentrisch zur Drehachse 6 weist das Drehelement 5 einen Zahnsektor 16 mit radialen Zähnen sowie eine Führungskurve 27 auf. Die Führungskurve 27 ist nach einer Seite axial offen und um die Drehachse 6 spiralartig ansteigend ausgebildet.

Die Combinerscheibe 14 weist an ihren einen Ende eine Lagerbuchse 28 auf, die auf Lagerhülsen 29, 29' der Lager 10, 10' um eine Schwenkachse 30 schwenkbar gelagert ist. Die Welle 9 ragt dabei frei drehbar durch die Lagerbuchse 28.

Auf einem einseitigen koaxialen Hülsenfortsatz 31 der Lagerbuchse 28 ist mit Reibschluss ein Combinerantriebselement 32 angeordnet, das ein konzentrisches Verzahnungselement 33 besitzt, in das die Verzahnung 7 des Drehelements 5 eingreifbar ist.

Die Anordnung des Combinerantriebselements 32 mit Reibschluss auf dem Hülsenfortsatz 31 bildet eine kraftschlüssige Kupplung. Wird die Combinerscheibe 14 unbeabsichtigt kraftbeaufschlagt, so kann sie den Reibschluss überwindend auf dem Hülsenfortsatz 31 verschwenken, so dass Beschädigungen vermieden werden.

Weiterhin ist an dem Combinerantriebselement 32 ein axialer Zapfen 34 angeordnet, der in die Führungskurve 27 einlaufen und entlang deren Erstreckung bis zu einem Endanschlag 35 entlanglaufen kann.

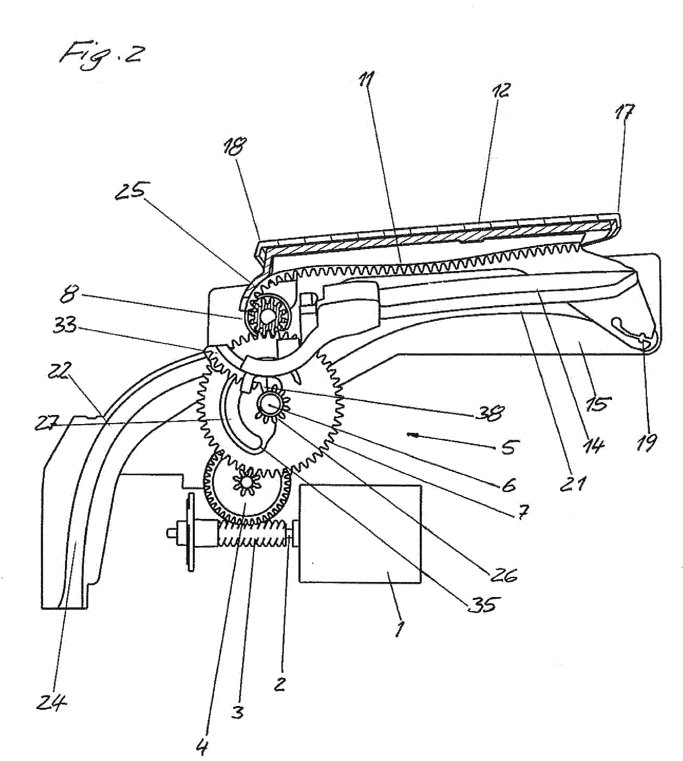

Befindet sich die Combinerscheibe 14 entsprechend Figur 2 in eingeklappter Ruheposition und die Abdeckung 12 in ihrer die Öffnung 13 verschließenden Verschlussposition, so treibt zum Öffnen der Abdeckung 12 der Schrittmotor 1 in einer ersten Drehrichtung über die Schnecke 3 und das Zwischenrad 4 das Drehelement 5 an, von dem wiederum die Zahnräder 8, 8' drehbar angetrieben werden.

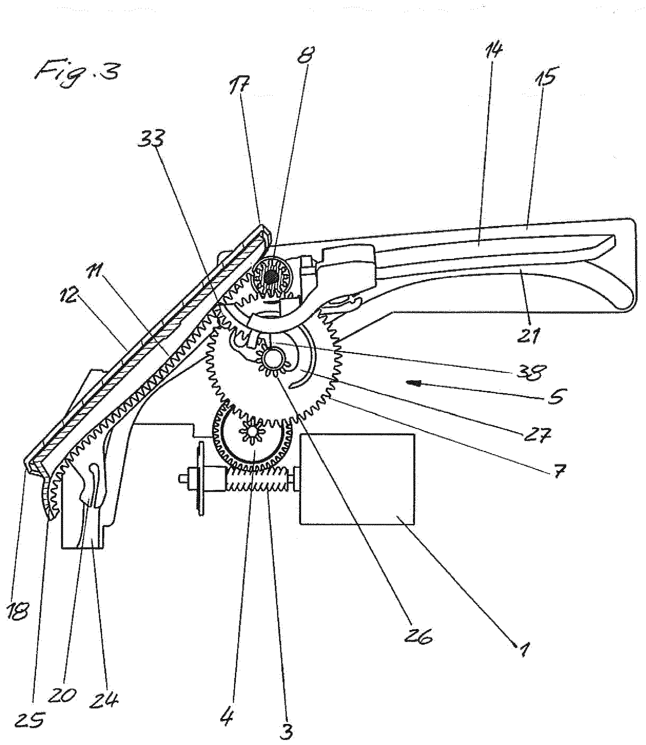

Da die Zahnräder 8, 8' an den Enden 25 der Zahnstangen 11 in deren Verzahnung eingreifen, wird die Abdeckung 12 in den Führungsbahnen 21, 22 zunächst bis kurz vor deren Enden geführt von der Beobachterseite 16 nach hinten wegbewegt (Figur 3).

Bisher war der Zahnsektor 26 durch seinen zahnfreien Bereich noch nicht in Eingriff mit dem Verzahnungselement 33. Eine Greifnase 38 an dem einen Ende der Verzahnung des Verzahnungselements 33 wird nun von dem ersten Zahn des Zahnsektors 26 erfasst und das Verzahnungselement 33 von dem Zahnsektor 26 drehbar angetrieben (Figur 3).

An dem Combinerantriebselement 32 ist ein radial hervorstehender Fanghaken 39 angeordnet, der nun gegen eine zum Inneren des Gehäuses gerichtete Nase 37 anstößt, die an der Abdeckung 12 an ihrem vorderen Ende vor der Zahnstange 11 angeordnet ist. Bei einem weiteren Verdrehen des Combinerantriebselements 32 schiebt der Fanghaken 39 die Abdeckung 12 entgegen einem Federelement 40 weiter bis in dessen Offenposition. Dabei gelangen die Zahnräder 8, 8' außer Eingriff von den Zahnstangen 11.

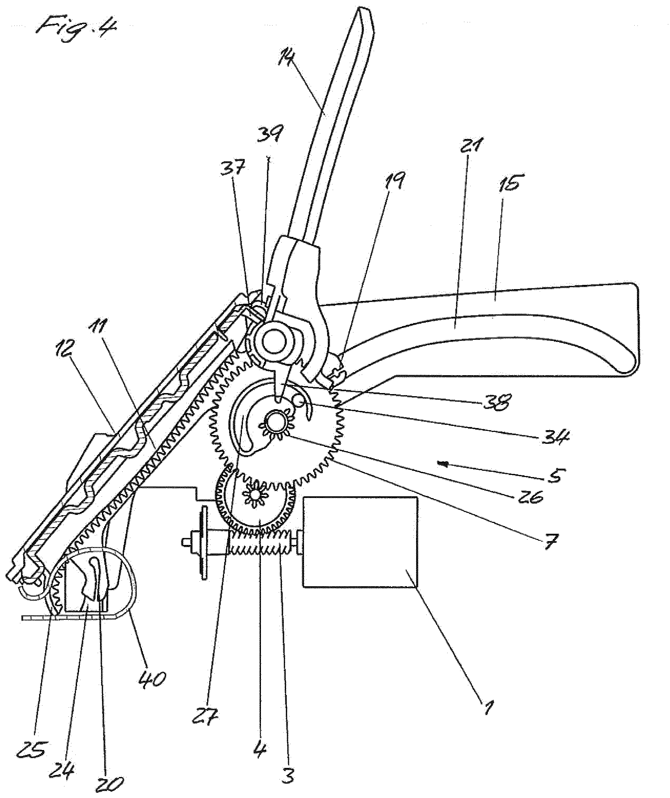

Mit dem Eingreifen des Zahnsektors 26 in das Verzahnungselement 33 und dessen Drehantrieb wird auch das mit dem Verzahnungselement 33 fest verbundene Combinerantriebselement 32 sowie die Combinerscheibe 14 um die Schwenkachse 30 geschwenkt, so dass die Combinerscheibe 14 aus ihrer annähernd waagrechten Ruhelage annähernd in ihre nach oben gerichtete Arbeitsposition gelangt (Figur 4).

Nahe dieser Arbeitsposition gelangt der Zahnsektor 26 aufgrund seines zahnfreien Bereichs außer Eingriff von dem Verzahnungselement 33, so dass bei weiterer Drehung des Drehelements 5 kein weiterer Drehantrieb des Combinerantriebselements 32 durch den Zahnsektor 26 erfolgt.

Nun ist aber der Zapfen 34 an dem der Drehachse 6 näheren Ende der Führungskurve 27 in diese eingelaufen. Bei dem weiteren Drehen des Drehelements 5 läuft der Zapfen 34 in der Führungskurve 27, wobei durch deren spiralartiges Entfernen von der Drehachse 6 ein langsames weiteres Verschwenken des Combinerantriebselements 32 und der Combinerscheibe 14 in ihre Arbeitsposition erfolgt.

Dieses langsame Verschwenken ermöglicht es, bei Erreichen der für den jeweiligen Beoabachter optimalen Arbeitsposition der Combinerscheibe 14 den Antrieb durch den Schrittmotor 1 zu stoppen. Durch schrittweisen Betrieb des Schrittmotors 1 in die eine oder die andere Drehrichtung kann nun auch eine Optimierung der Arbeitsposition erfolgen.

Da in dieser Lage der Fanghaken 39 über die Nase 37 die Abdeckung 12 gegen das gespannte Federelement 40 hält, wird über dessen Spannung auch die Combinerscheibe 14 spielfrei und damit zumindest weitgehend vibrationsfrei gehalten.

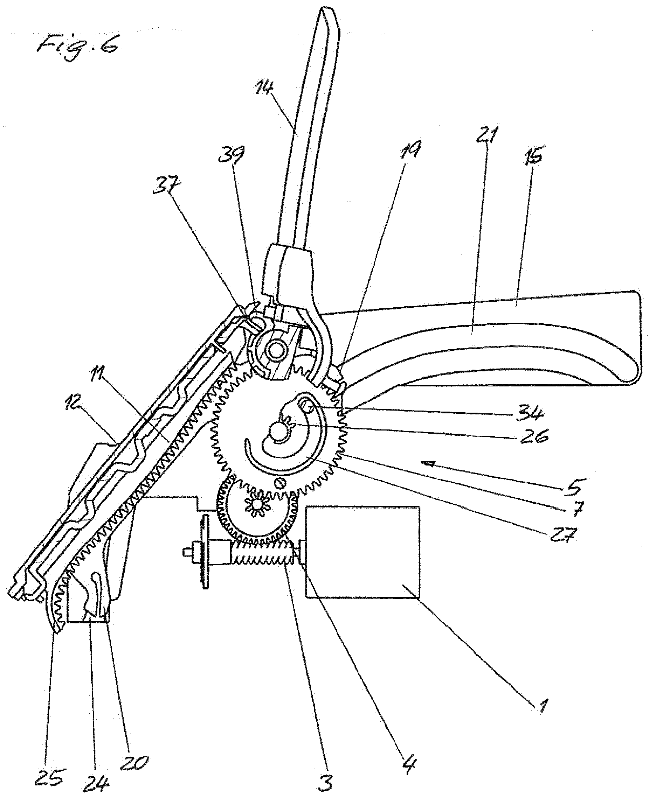

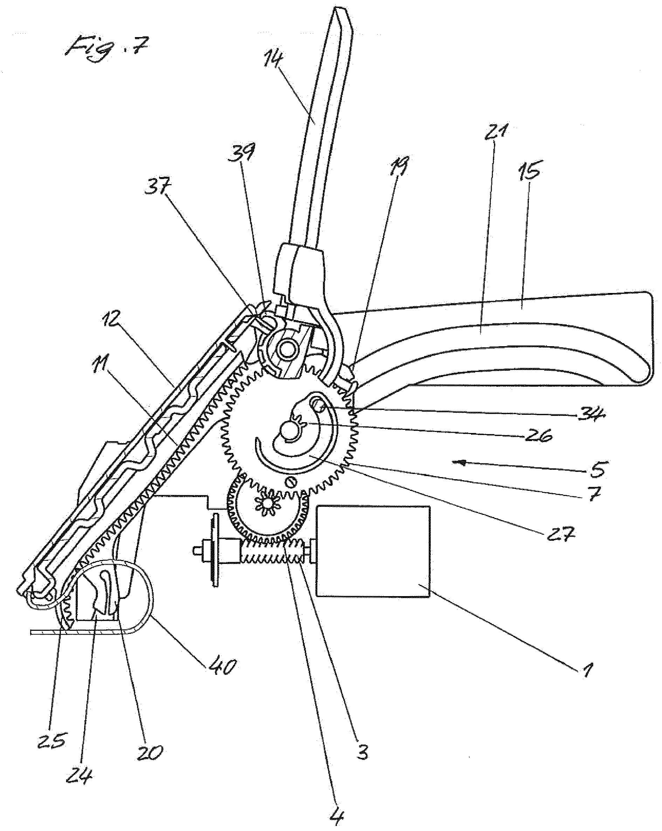

Nun ist die Head-Up-Anzeige arbeitsbereit (Figuren 6 und 7).

Soll die Combinerscheibe 14 wieder in das Gehäuse eingefahren werden, wird der Schrittmotor 1 in entgegengesetzte Drehrichtung in Betrieb gesetzt.

Dabei bewegt sich zunächst der Zapfen 34 wieder bis zum der Drehachse näheren Ende der Führungskurve 27, wo dann der Zahnsektor 26 wieder in Eingriff mit dem Verzahnungselement 33 gelangt und die Combinerscheibe 14 wieder in ihre Ruheposition gefahren wird.

Dabei bewegt sich auch der Fanghaken 39 von der Nase 37 weg, so dass das gespannte Federelement 40 die Abdeckung 12 so weit in Schließrichtung verschieben kann, dass die Zahnräder 8, 8' wieder in Eingriff in die Zahnstangen 11 gelangen. Von den Zahnrädern 8, 8' wird nun die Abdeckung wieder in ihre Verschlussposition gefördert. Bei Erreichen der Verschlussposition laufen die zweiten Führungselemente 20, 20' in die Anfangsbereiche 23 der zweiten Führungsbahnen 22, wodurch das Rückend 18 der Abdeckung 12 angehoben wird und die Abdeckung 12 eine annähernd horizontale Ausrichtung erhält.

## Patentansprüche

1. Head-Up-Anzeige mit einer Positioniereinrichtung für eine um eine Schwenkachse (30) schwenkbare Combinerscheibe (14) der Head-Up-Anzeige, mit einem reversierbaren Drehantrieb, von dem ein Drehelement (5) um eine Drehachse (6) drehbar antreibbar ist, durch das die Combinerscheibe (14) zwischen einer Ruheposition in einem Gehäuse in einer aus einer Öffnung (13) des Gehäuses herausragenden Arbeitsposition bewegbar antreibbar ist, wobei die Öffnung (13) des Gehäuses von einer Abdeckung (12) der Head-Up-Anzeige verschließbar ist und wobei
- das Drehelement (5) in der Ruheposition der Combinerscheibe (14) und der Verschlußposition der Abdeckung (12) von einem die Combinerscheibe (14) bewegbar antreibenden Antriebsmechanismus der Combinerscheibe (14) entkoppelt und mit einem die Abdeckung (12) bewegbar antreibenden Antriebsmechanismus der Abdeckung (12) gekoppelt ist,
- das Drehelement (5) in der Offenposition der Abdeckung (12) von dem Antriebsmechanismus der Abdeckung (12) entkoppelt ist und das Drehelement (5) mit dem Antriebsmechanismus der Combinerscheibe (14) gekoppelt ist, sodaß
die Abdeckung (12) von dem Drehelement (5) einer Bewegung der Combinerscheibe (14) aus der Ruheposition in die Arbeitsposition voreilend aus einer die Öffnung (13) verschließenden Verschlussposition in eine die Öffnung (13) freigebende Offenposition sowie aus ihrer Offenposition einer Bewegung der Combinerscheibe (14) aus der Arbeitsposition in die Ruheposition nacheilend in ihre Verschlussposition bewegbar antreibbar ist, und wobei bei einem Einfahrbetrieb der Combinerscheibe (14) aus ihrer Arbeitsposition in ihre Ruheposition das Drehelement (5) mit dem Antriebsmechanismus der Combinerscheibe (14) gekoppelt ist und die Combinerscheibe (14) aus ihrer Arbeitsposition in ihre Ruheposition bewegbar antreibbar ist und wobei nach Erreichen der Ruheposition der Combinerscheibe (14) der Antriebsmechanismus der Combinerscheibe (14) von dem Drehelement (5) entkoppelt und der Antriebsmechanismus der Abdeckung (12) mit dem Drehelement (5) gekoppelt ist und die Abdeckung (12) aus ihrer Offenposition in ihre Verschlussposition bewegbar antreibbar ist.

2. Head-Up-Anzeige nach Anspruch 1, **dadurch gekennzeichnet, dass** die Abdeckung (12) in einer oder mehreren feststehenden Führungen zwischen ihrer Verschlussposition und ihrer Offenposition bewegbar geführt ist.

3. Head-Up-Anzeige nach Anspruch 2, **dadurch gekennzeichnet, dass** die Abdeckung (12) an ihren beiden in ihre Bewegungsrichtung gerichteten Seitenbereichen Führungselemente (19, 20, 20') aufweist, die in den Führungen bewegbar geführt sind.

4. Head-Up-Anzeige nach Anspruch 3, **dadurch gekennzeichnet, dass** ein erstes Führungselement (19) an dem der in Arbeitsposition befindlichen Combinerscheibe (14) näheren Frontendbereich (17) der Abdeckung (12) und ein zweites Führungselement (20, 20') an dem der in Arbeitsposition befindlichen Combinerscheibe (14) entferten Rückendbereich (18) der Abdeckung (12) angeordnet ist.

5. Head-Up-Anzeige nach Anspruch 4, **dadurch gekennzeichnet, dass** die Führungen zwei annähernd hintereinander von einer Beobachterseite (16) der in Arbeitsposition befindlichen Combinerscheibe (14) weggerichtete Führungsbahnen (21, 22) sind, wobei das erste Führungselement (19) in der der Combinerscheibe (14) näheren ersten Führungsbahn (21) und das zweite Führungselement (20, 20') in der der Combinerscheibe (14) entfernteren zweiten Führungsbahn (22) bewegbar geführt ist.

6. Head-Up-Anzeige nach Anspruch 5, **dadurch gekennzeichnet, dass** sich die erste Führungsbahn (21) annähernd waagrecht und die zweite Führungsbahn (22) ausgehend von dem Bereich des der Combinerscheibe (14) entfernten Endes (36) der ersten Führungsbahn (21) in einem bogenartigen Verlauf zu ihrem annähernd senkrecht nach unten gerichteten Endbereich (24) hin erstreckt.

7. Head-Up-Anzeige nach Anspruch 6, **dadurch gekennzeichnet, dass** der der Combinerscheibe (14) nähere Anfangsbereich (23) der zweiten Führungsbahn (22) annähernd senkrecht nach oben gerichtet ist.

8. Head-Up-Anzeige nach einem der vorhergehenden Ansprüche, **dadurch gekennzeichnet, dass** die Abdeckung (12) ein oder mehrere Zahnstangen (11) besitzt, die sich über die Länge der Abdeckung (12) in Bewegungsrichtung der Abdeckung (12) erstrecken und in die jeweils ein Zahnkranz des Drehelements oder ein von dem Drehelement (12) drehbar antreibbares Zahnrad (8, 8') eingreifbar ist.

9. Head-Up-Anzeige nach Anspruch 8, **dadurch gekennzeichnet, dass** die Zahnstangen (11) im Rückendbereich (18) der Abdeckung (12) einen zur Zahninnenseite nach innen gebogenen Verlauf aufweisen.

10. Head-Up-Anzeige nach einem der Ansprüche 8 und 9, **dadurch gekennzeichnet, dass** die Zahnstangen (11) bei Erreichen des Offenpositionsbereichs der Abdeckung (12) aus der Verzahnung des Zahnkranzes des Drehelements oder der Verzahnung des Zahnrads (8, 8') aushebbar sind und bei Verlassen des Offenpositionsbereichs der Abdeckung (12) in die Verzahnung des Zahnkranzes des Drehelements oder der Verzahnung des Zahnrads (8, 8') einsetzbar sind.

11. Head-Up-Anzeige nach Anspruch 10, **dadurch gekennzeichnet, dass** die Zahnstangen und/oder die Abdeckung (12) in der Offenposition der Abdeckung (12) von einem Federelement (40) in Richtung zur Verschlussposition der Abdeckung (12) kraftbeaufschlagt sind.

12. Head-Up-Anzeige nach einem der vorhergehenden Ansprüche, **dadurch gekennzeichnet, dass** an dem Drehelement (5) ein konzentrischer Zahnsektor (26) angeordnet ist, dessen Verzahnung während der Bewegung der Abdeckung (12) aus der Verschlussposition in die Offenposition außer Eingriff von einem sektorförmigen Verzahnungselement (33) ist und nach Erreichen der Offenposition der Abdeckung (12) bei weiterer Drehung des Drehelements (5) in gleiche Drehrichtung in Eingriff mit dem sektorförmigen Verzahnungselement (33) gelangt und dieses um einen Stellhub drehbar antreibt, wobei sich das sektorförmige Verzahnungselement (33) konzentrisch zur Schwenkachse (30) der Combinerscheibe (14) erstreckt und mit der Combinerscheibe (14) verbunden ist.

13. Head-Up-Anzeige nach Anspruch 12, **dadurch gekennzeichnet, dass** das Verzahnungselement (33) über eine kraftschlüssige Kupplung mit der Combinerscheibe (14) verbunden ist.

14. Head-Up-Anzeige nach einem der Ansprüche 12 und 13, **dadurch gekennzeichnet, dass** der konzentrische Zahnsektor (26) des Drehelements (5) nach Antrieb um den Stellhub außer Eingriff von dem sektorförmigen Verzahnungselement (33) gelangt und das sektorförmige Verzahnungselement (33) von einer Feinstelleinrichtung über den Stellhub hinaus schwenkbar antreibbar ist.

15. Head-Up-Anzeige nach Anspruch 14, **dadurch gekennzeichnet, dass** die Feineinstelleinrichtung eine Führungskurve (27) an dem Drehelement (5) aufweist, in die am Ende des Stellhubs ein zur Schwenkachse (30) der Combinerscheibe (14) paralleler Zapfen (34) einläuft und geführt ist, wobei die Führungskurve (27) um die Drehachse (6) des Drehelements (5) spiralartig ansteigend ausgebildet ist.

## Claims

1. Head-up display with a positioning device for a combiner screen (14), which is pivotable about a pivot axis (30), of the head-up display, with a reversible rotary drive by which a rotary element (5) can be driven rotatably about an axis of rotation (6), said rotary element being able to drive the combiner screen (14) so as to be movable between an inoperative position in a housing into a working position projecting out of an opening (13) of the housing, wherein the opening (13) of the housing is closable by a covering (12) of the head-up display, and wherein
- in the inoperative position of the combiner screen (14) and the closure position of the covering (12), the rotary element (5) is decoupled from a drive mechanism of the combiner screen (14), said drive mechanism driving the combiner screen (14) in a movable manner, and is coupled to a drive mechanism of the covering (12), said drive mechanism driving the covering (12) in a movable manner,
- in the open position of the covering (12), the rotary element (5) is decoupled from the drive mechanism of the covering (12) and the rotary element (5) is coupled to the drive mechanism of the combiner disc (14)
such that
the covering (12) can be driven by the rotary element (5) in advance of a movement of the combiner disc (14) from the inoperative position into the working position so as to be movable from a closure position closing the opening (13) into an open position opening up the opening (13), and also, trailing behind a movement of the combiner screen (14) from the working position into the inoperative position, so as to be movable from its open position into its closure position, and wherein, during a retraction operation of the combiner screen (14) from its working position into its inoperative position, the rotary element (5) is coupled to the drive mechanism of the combiner disc (14) and the combiner disc (14) can be driven so as to be movable from its working position into its inoperative position, and wherein, after the inoperative position of the combiner disc (14) is reached, the drive mechanism of the combiner disc (14) is decoupled from the rotary element (5) and the drive mechanism of the covering (12) is coupled to the rotary element (5) and the covering (12) can be driven so as to be movable from its open position into its closure position.

2. Head-up display according to Claim 1, **characterized in that** the covering (12) is guided movably between its closure position and its open position in one or more fixed guides.

3. Head-up display according to Claim 2, **characterized in that** the covering (12) on its two side regions directed in its direction of movement has guide elements (19, 20, 20') which are guided movably in the guides.

4. Head-up display according to Claim 3, **characterized in that** a first guide element (19) is arranged on the front end region (17) of the covering (12), which front end region is closer to the combiner screen (14) in the working position, and a second guide element (20, 20') is arranged on the back end region (18) of the covering (12), which back end region is further away from the combiner screen (14) in the working position.

5. Head-up display according to Claim 4, **characterized in that** the guides are two guide tracks (21, 22) directed away approximately one behind the other from an observer's side (16) of the combiner screen (14) in the working position, wherein the first guide element (19) is guided movably in the first guide track (21) closer to the combiner screen (14) and the second guide element (20, 20') is guided movably in the second guide track (22) further away from the combiner screen (14).

6. Head-up display according to Claim 5, **characterized in that** the first guide track (21) extends approximately horizontally and the second guide track (22) extends from the region of that end (36) of the first guide track (21) which is further away from the combiner screen (14) in an arc-like course to its end region (24) directed approximately vertically downward.

7. Head-up display according to Claim 6, **characterized in that** the starting region (23) of the second guide track (22), which starting region is closer to the combiner screen (14), is directed approximately vertically upward.

8. Head-up display according to one of the preceding claims, **characterized in that** the covering (12) has one or more racks (11) which extend over the length of the covering (12) in the direction of movement of the covering (12) and in which in each case a toothed rim of the rotary element or a gearwheel (8, 8') which can be driven rotatably by the rotary element (12) can engage.

9. Head-up display according to Claim 8, **characterized in that** the racks (11) in the back end region (18) of the covering (12) has a course curved inwards to the inner side of the piece.

10. Head-up display according to either of Claims 8 and 9, **characterized in that** the racks (11) on reaching the open position region of the covering (12) can be lifted out of the toothing of the toothed rim of the rotary element or of the toothing of the gearwheel (8, 8') and on leaving the open position region of the covering (12) can be inserted into the toothing of the toothed rim of the rotary element of a toothing of the gearwheel (8, 8').

11. Head-up display according to Claim 10, **characterized in that** the rack and/or the covering (12) in the open position of the covering (12) are subjected to force in the direction of the closure position of the covering (12) by a spring element (40) .

12. Head-up display according to one of the preceding claims, **characterized in that** a concentric tooth sector (26) is arranged on the rotary element (5), the toothing of which tooth sector is disengaged from a sector-shaped toothing element (33) during the movement of the covering (12) from the closure position into the open position and, after the open position of the covering (12) is reached, passes upon further rotation of the rotary element (5) in the same direction of rotation into engagement with the sector-shaped toothing element (33) and drives the latter rotatably about an adjustment stroke, wherein the sector-shaped toothing element (33) extends concentrically with respect to the pivot axis (30) of the combiner screen (14) and is connected to the combiner screen (14).

13. Head-up display according to Claim 12, **characterized in that** the toothing element (33) is connected to the combiner screen (14) via a force-fitting coupling.

14. Head-up display according to either of Claims 12 and 13, **characterized in that** the concentric tooth sector (26) of the rotary element (5) after being driven about the adjustment stroke is disengaged from the sector-shaped toothing element (33), and the sector-shaped toothing element (33) can be driven pivotably beyond the adjustment stroke by a fine adjustment device.

15. Head-up display according to Claim 14, **characterized in that** the fine adjustment device has a guide curve (27) on the rotary element (5), into which guide curve a stud (34) which is parallel to the pivot axis (30) of the combiner screen (14) runs and is guided at the end of the adjustment stroke, wherein the guide curve (27) is formed in a manner rising spirally about the axis of rotation (6) of the rotary element (5).

## Revendications

1. Dispositif d'affichage tête haute comprenant un dispositif de positionnement pour un écran combineur (14), pivotant autour d'un axe de pivotement (30), du dispositif d'affichage tête haute, comprenant un entraînement rotatif réversible par lequel un élément rotatif (5) peut être entraîné en rotation autour d'un axe de rotation (6), élément rotatif au moyen duquel l'écran combineur (14) peut être entraîné de manière déplaçable entre une position de repos dans un boîtier et une position de travail faisant saillie hors d'une ouverture (13) du boîtier, l'ouverture (13) du boîtier pouvant être fermée par un couvercle (12) du dispositif d'affichage tête haute et
- l'élément rotatif (5) étant, dans la position de repos de l'écran combineur (14) et la position de fermeture du couvercle (12), désaccouplé d'un mécanisme d'entraînement de l'écran combineur (14) entraînant de manière déplaçable l'écran combineur (14) et accouplé à un mécanisme d'entraînement du couvercle (12) entraînant de manière déplaçable le couvercle (12),
- l'élément rotatif (5) étant désaccouplé du mécanisme d'entraînement du couvercle (12) dans la position ouverte du couvercle (12) et l'élément rotatif (5) étant accouplé au mécanisme d'entraînement de l'écran combineur (14), de telle sorte que
le couvercle (12) peut être entraîné de manière déplaçable par l'élément rotatif (5) d'une position de fermeture fermant l'ouverture (13) à une position ouverte dégageant l'ouverture (13), en avance par rapport à un déplacement de l'écran combineur (14) de la position de repos à la position de travail, et entraîné de manière déplaçable de sa position ouverte à position de fermeture, en retard par rapport à un déplacement de l'écran combineur (14) de la position de travail à la position de repos, et lors d'un fonctionnement de rentrée de l'écran combineur (14) de sa position de travail à sa position de repos, l'élément rotatif (5) étant accouplé au mécanisme d'entraînement de l'écran combineur (14) et l'écran combineur (14) pouvant être entraîné de manière déplaçable de sa position de travail à sa position de repos, et une fois que la position de repos de l'écran combineur (14) a été atteinte, le mécanisme d'entraînement de l'écran combineur (14) étant désaccouplé de l'élément rotatif (5) et le mécanisme d'entraînement du couvercle (12) étant accouplé à l'élément rotatif (5) et le couvercle (12) pouvant être entraîné de manière déplaçable de sa position ouverte à sa position de fermeture.

2. Dispositif d'affichage tête haute selon la revendication 1, **caractérisé en ce que** le couvercle (12) est guidé de manière déplaçable dans un ou plusieurs guides fixes entre sa position de fermeture et sa position ouverte.

3. Dispositif d'affichage tête haute selon la revendication 2, **caractérisé en ce que** le couvercle (12) comprend, au niveau de ses deux régions latérales orientées dans sa direction de déplacement, des éléments de guidage (19, 20, 20') qui sont guidés de manière déplaçable dans les guides.

4. Dispositif d'affichage tête haute selon la revendication 3, **caractérisé en ce qu'**un premier élément de guidage (19) est disposé au niveau de la région d'extrémité avant (17) du couvercle (12) plus proche de l'écran combineur (14) se trouvant dans la position de travail et un deuxième élément de guidage (20, 20') est disposé au niveau de la région d'extrémité arrière (18) du couvercle (12) éloignée de l'écran combineur (14) se trouvant dans la position de travail.

5. Dispositif d'affichage tête haute selon la revendication 4, **caractérisé en ce que** les guides sont deux glissières de guidage (21, 22) opposées à un côté d'observation (16) de l'écran combineur (14) se trouvant dans la position de travail approximativement l'une derrière l'autre, le premier élément de guidage (19) étant guidé de manière déplaçable dans la première glissière de guidage (21) plus proche de l'écran combineur (14) et le deuxième élément de guidage (20, 20') étant guidé de manière déplaçable dans la deuxième glissière de guidage (22) éloignée de l'écran combineur (14).

6. Dispositif d'affichage tête haute selon la revendication 5, **caractérisé en ce que** la première glissière de guidage (21) s'étend approximativement horizontalement et la deuxième glissière de guidage (22) s'étend à partir de la région de l'extrémité (36) de la première glissière de guidage (21) éloignée de l'écran combineur (14), suivant une allure arquée, jusqu'à sa région d'extrémité (24) orientée vers le bas approximativement verticalement.

7. Dispositif d'affichage tête haute selon la revendication 6, **caractérisé en ce que** la région de départ (23), plus proche de l'écran combineur (14), de la deuxième glissière de guidage (22) est orientée vers le haut approximativement verticalement.

8. Dispositif d'affichage tête haute selon l'une des revendications précédentes, **caractérisé en ce que** le couvercle (12) comporte une ou plusieurs crémaillères (11) qui s'étendent sur la longueur du couvercle (12) dans la direction de déplacement du couvercle (12) et dans lesquelles peut venir en prise respectivement une couronne dentée de l'élément rotatif ou une roue dentée (8, 8') pouvant être entraînée en rotation par l'élément rotatif (12).

9. Dispositif d'affichage tête haute selon la revendication 8, **caractérisé en ce que** les crémaillères (11) présentent, dans la région d'extrémité arrière (18) du couvercle (12), une allure courbée vers l'intérieur par rapport au côté intérieur denté.

10. Dispositif d'affichage tête haute selon l'une des revendications 8 et 9, **caractérisé en ce que** les crémaillères (11) peuvent, lorsque la région de position ouverte du couvercle (12) est atteinte, être soulevées hors de la denture de la couronne dentée de l'élément rotatif ou de la denture de la roue dentée (8, 8') et peuvent être insérées dans la denture de la couronne dentée de l'élément rotatif ou dans la denture de la roue dentée (8, 8') lorsque le couvercle (12) quitte la région de position ouverte.

11. Dispositif d'affichage tête haute selon la revendication 10, **caractérisé en ce que** les crémaillères et/ou le couvercle (12) sont soumis à la force d'un élément ressort (40) en direction de la position de fermeture du couvercle (12) dans la position ouverte du couvercle (12).

12. Dispositif d'affichage tête haute selon l'une des revendications précédentes, **caractérisé en ce qu'**un secteur denté concentrique (26) est disposé sur l'élément rotatif (5), secteur dont la denture est, pendant le déplacement du couvercle (12) de la position de fermeture à la position ouverte, hors de prise avec un élément de denture (33) en forme de secteur et, une fois que le couvercle (12) a atteint la position ouverte, en cas de rotation supplémentaire de l'élément rotatif (5) dans le même sens de rotation, vient en prise avec l'élément de denture (33) en forme de secteur et entraîne celui-ci en rotation sur une course de réglage, l'élément de denture (33) en forme de secteur s'étendant concentriquement à l'axe de pivotement (30) de l'écran combineur (14) et étant relié à l'écran combineur (14) .

13. Dispositif d'affichage tête haute selon la revendication 12, **caractérisé en ce que** l'élément de denture (33) est relié à l'écran combineur (14) par le biais d'un accouplement à force.

14. Dispositif d'affichage tête haute selon l'une des revendications 12 et 13, **caractérisé en ce que** le secteur denté concentrique (26) de l'élément rotatif (5) vient hors de prise avec l'élément de denture (33) en forme de secteur après l'entraînement sur la course de réglage et l'élément de denture (33) en forme de secteur peut être entraîné de manière pivotante par un dispositif de réglage précis au-delà de la course de réglage.

15. Dispositif d'affichage tête haute selon la revendication 14, **caractérisé en ce que** le dispositif de réglage précis comprend une courbe de guidage (27) sur l'élément rotatif (5), dans laquelle entre et est guidé, à la fin de la course de réglage, un tenon (34) parallèle à l'axe de pivotement (30) de l'écran combineur (14), la courbe de guidage (27) étant réalisée de manière ascendante à la manière d'une spirale autour de l'axe de rotation (6) de l'élément rotatif (5).
